# EUROPEAN PATENT SPECIFICATION

(11) **EP 0 553 243 B1**
(45) Date of publication and mention of the grant of the patent: **07.12.1994**
(21) Application number: 91919588.3
(22) Date of filing: 15.10.1991
(51) Int. Cl.: B01J 8/42, F27B 15/14, F27D 23/00, H05B 3/00, B22C 5/18

(54) **FLUIDIZED BED APPARATUS AND METHOD USING SAME**
WIRBELBETTAPPARAT UND VERFAHREN
APPAREIL A LIT FLUIDISE ET PROCEDE D'UTILISATION

(30) Priority: 16.10.1990 US 598415
(43) Date of publication of application: 04.08.1993
(73) Proprietor: BGK FINISHING SYSTEMS, INC., Blaine, MN 55434 (US)
(72) Inventor: HEATH, James, E., Burlington, Ontario (CN); EPPELAND, John, Roy, St. James, MN 56081 (US); NELSON, James, S., Mounds View, MN 55432 (US)
(74) Representative: Rackham, Stephen Neil
(86) International application number: US9107539
(87) International publication number: WO9206781

(56) References cited:
- EP-A- 0 132 493
- US-A- 4 818 349
- US-A- 5 006 317

## Description

The use of fluidized bed furnaces for heat treating a product is well known. Such furnaces generate an extremely hot bed of fluidizing particles such as aluminum oxide. The furnaces can be used for both continuous processing of a product or batch processing of products.

U.S. Patent No. 4,752,061 teaches a fluidized bed furnace which uses infrared radiation as the heating source. One advantage of using infrared radiation as the heating source is that it permits the use of inert gases to fluidize the particles in the furnace. As a result, a controlled atmosphere can be provided surrounding the product being heat treated in the furnace.

The aforesaid U.S. Patent No. 4,752,061 places infrared lamps out of the bed behind a quartz wall or screen. As a result, the distance from the infrared lamps to the bed results in a high temperature gradient with too little of the energy source contributing to the fluidization of the bed. This leads to significant energy inefficiency. Also, the infrared lamps may be in close proximity to the stainless steel retort. This could result in partial melting of the retort.

According to a first aspect of the present invention, a method comprises the steps of:
admitting used foundry sand, containing binders, into said volume so as to define a bed of said foundry sand within said volume wherein said bed of said foundry sand has a predetermined elevation within said volume;
disposing a plurality of conduits of infrared radiation transparent material within said bed of said foundry sand and beneath said predetermined elevation;
disposing an electrically powered source of infrared radiation, for generating infrared radiation heat for heating said bed of said used foundry sand, within each one of said plurality of conduits such that each one of said sources of infrared radiation is protected by respective ones of said conduits from said bed of said used foundry sand;
energising said sources of infrared radiation so as to generate heat sufficient to separate said sand from said binders so as to re-claim said sand;
fluidizing said bed of said used foundry sand while heating said bed of said used foundry sand by means of said sources of infrared radiation; and
discharging said heat treated re-claimed sand from said bed of said used foundry sand such that said re-claimed foundry sand can again be used as foundry sand in forming sand casting molds.

According to a second aspect of the present invention, an apparatus for re-claiming used foundry sand, comprises:
means defining a volume for receiving a bed of used foundry sand containing binders;
means for charging said used foundry sand into said means defining said volume so as to form a bed of said used foundry sand, having a predetermined elevation, within said means defining said volume;
a plurality of conduits of infrared radiation transparent material disposed in a submerged state within said bed of said used foundry sand so as to be disposed beneath said predetermined elevation;
a plurality of electrically powered sources of infrared radiation for generating infrared radiation heat sufficient to heat said bed of said used foundry sand to a predetermined temperature level so as to separate said sand from said binders so as to re-claim said sand, respectively disposed within said plurality of conduits so as to be protected by respective ones of said conduits from said sand particles of said bed of used foundry sand;
means for introducing a fluidizing gas into said bed of said used foundry sand; and
means for discharging said heat treated re-claimed sand from said means defining said volume such that said re-claimed foundry sand can again be used as foundry sand for forming sand casting molds.

The present invention will now be described in detail with reference to the accompanying drawings, in which:-
Figure 1 is a side elevation view of a fluidizing bed furnace according to the present invention, with a portion of an outer skin removed to expose certain interior elements of the furnace;
Figure 2 is an enlarged view of certain of the interior elements of the furnace of Figure 1, with bus plates shown removed;
Figure 3 is a side elevation view, shown partially in section, showing connection of infrared heating elements to bus plates;
Figure 4 is a side elevation schematic representation of the furnace of the present invention;
Figure 5 is an end elevation view, shown schematically, of the furnace of the present invention;
Figure 6 is a top plan view, shown schematically, of the furnace of the present invention; and
Figure 7 is a view of a processing system using the apparatus of the invention in a processor for re-claiming foundry sand.

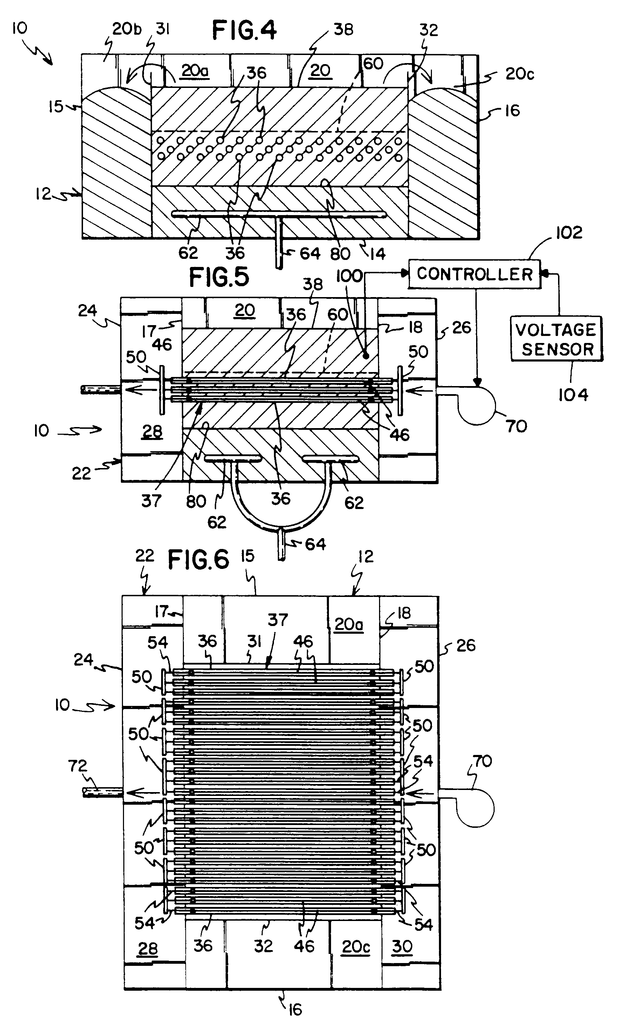

Referring now to the various Figures in which identical elements are numbered identically throughout, the description of the preferred embodiment will now be given with reference to a furnace 10. Shown best in Figures 4 and 5, the furnace 10 includes a retort 12, which is preferably formed of R330 stainless steel or the like. The retort 12 includes a bottom wall 14, end walls 15, 16 and side walls 17, 18. Walls 14 to 18 cooperate to define a retort interior 20. A cover (not shown in the Figures) may be provided to cover the top of the retort 12.

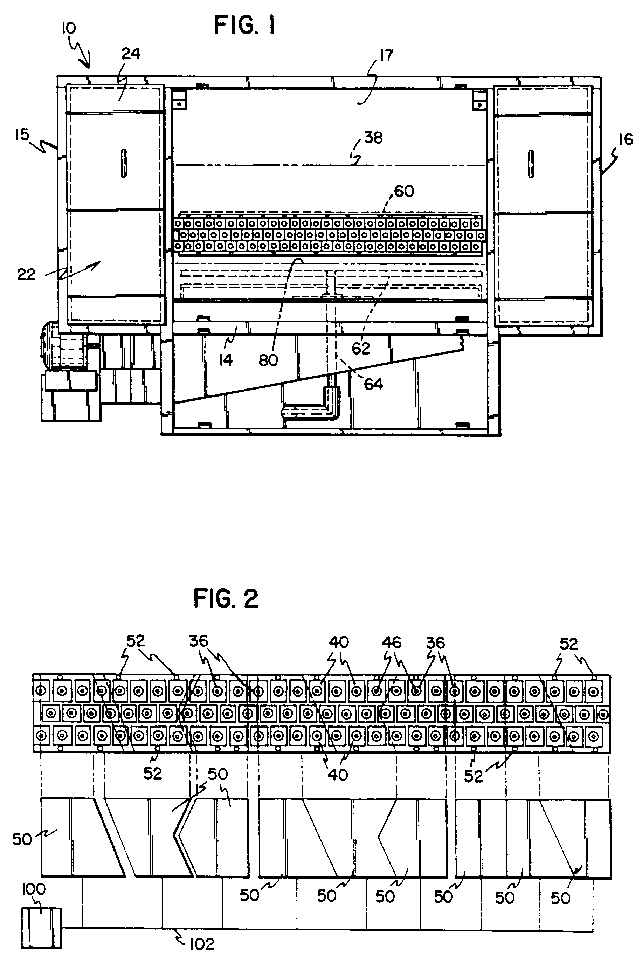

The furnace 10 also includes an outer shell 22 shown best in Figs. 5 and 6. Outer shell 22 includes a first outer shell wall 24 covering wall 17, and a second outer shell wall 26 covering wall 18. In Fig. 1, a central portion of shell wall 24 has been removed to expose wall 17. Wall 24 and wall 17 cooperate to define an exhaust plenum 28. Walls 26 and 18 cooperate to define an inlet plenum 30.

As best shown in Figs. 4 and 6, interior divider walls 31 and 32 are provided within the interior 20. Walls 31, 32 extend between side walls 17 and 18 and are parallel to end walls 15 and 16. The divider walls 31, 32 extend from floor 14 partially toward the top of the retort 12. Walls 31, 32 divide retort interior 20 into a fluidizing chamber 20a, a first overflow chamber 20b, and a second overflow chamber 20c (see Fig. 4).

A plurality of quartz tubes 36 are plurality extending between and through walls 17 and 18. As shown, the tubes 36 are disposed in parallel alignment, generally perpendicular to side walls 17, 18 and parallel to the floor 14 of the retort 12. The tubes 36 are disposed within the fluidizing portion 20a of interior 20, and are located beneath a predetermined elevation 38 (see Fig. 4) of fluidizing particles to be retained within the chamber 20a.

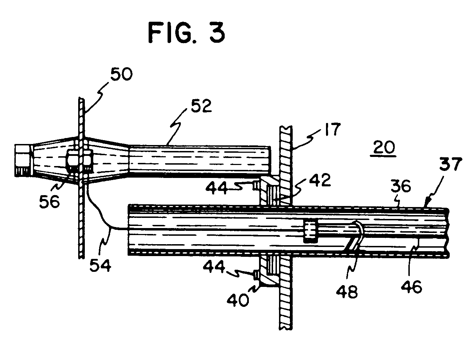

Fig. 3 shows attachment of the tube 36 to side wall 17. The quartz tube 36 is similarly attached to side wall 18. As shown in Fig. 3, the tube 36 extends through side wall 17, and is connected to the side wall 17 by a steel mounting clamp 40. The clamp 40 houses a plurality of ceramic washers 42. The clamp 40 is attached to side wall 17 by bolts 44.

An infrared lamp 46 is disposed within each of tubes 36, as best shown in Figs. 2, 3, 5 and 6, (for clarity, lamps are not shown within the tubes 36 in Figs. 1 and 4). The lamp 46 is completely contained between walls 17, 18, and is retained in coaxial alignment within tube 36 by a mounting clip 48.

To provide electrical energy to the plurality of lamps 46, a plurality of bus bar plates 50 are provided. (For clarity bus bar plates are not shown in Figs. 1 and 4.) As shown in Fig. 2, nine bus bar plates are provided for each side 17, 18 of the retort 12. In the schematic representation of Fig. 6, eight bus bar plates are shown on each side.

The bus bar plates 50 are electrically conductive plates of metal. Each plate 50 is connected to a separately controllable source (not shown) of electrical power to energize the plate 50.

The plates 50 are secured to the walls 17, 18 by bus bar plate mounts 52 (see Fig. 3), which are preferably ceramic. A lead 54 connects the infrared lamp 46 to the bus bar plate 50. The lead 54 is connected to the bus bar plate 50 by a nut and bolt combination 56.

As best shown in Fig. 2, a plurality of lamps 46 are covered by any given bus bar plate 50. In the expanded view of Fig. 2, each of the bus bar plates 50 is removed from covering the lamps 46 and tubes 36. The positioning of the bus bar plates 50 over the lamps 46 in Fig. 2 is shown in phantom lines. As a result of having a plurality of lamps 46 covered by a plurality of different bus bar plates 50, the length of the fluidizing chamber 20a can be divided into a plurality of zones. Each bus bar plate 50 with its associated lamps 46 constitutes a given zone. By separately regulating a current to each bus bar plate 50, the intensity of the lamps connected to each bus bar plate 50 can be separately controlled. As a result, a temperature gradient can be created across the length of the chamber 20a.

Shown in Figs. 1, 4 and 5, a stainless steel screen 60 is placed above the lamps 46 and quartz tubes 36. The screen 60 prevents a product that is being heat treated from falling onto the quartz tubes 36 and possibly damaging them.

Fluidizing tubes 62 are provided disposed between the floor 14 and the quartz tubes 36. The tubes 62 are connected via conduit 64 to a source (not shown) of a fluidizing gas. The fluidizing gas may be air or any inert gas such as nitrogen. The fluidizing tubes 62 may be such as those shown and described in U.S. Patent No. 4,752,061 and indicated by reference numerals 98 in Figure 5 of that patent.

A coolant mechanism is provided to pass a cooling fluid (preferably air) through the tubes 36 to cool the infra-red lamps 46. A blower 70 is provided connected to inlet plenum 30. An exhaust fan (not shown) may be connected through an exhaust conduit 72 to exhaust plenum 28. As a result, cooling air may be forced from plenum 30 through each of tubes 36 into plenum 28 and out exhaust conduit 72.

A bed of fluidizing particles (preferably granular aluminum oxide) is provided within the retort 12. A first layer 80 of coarse particle (preferably of particle diameter less than 1038 µm (12 grit size)) is provided covering the fluidizing tubes 62 and terminating beneath the quartz tubes 36. Finer aluminum oxide sand (preferably of particle diameter less than 149 µm (100 grit size)) rests on top of the coarser sand 80, and terminates at level 38. The coarser sand 80 diffuses the fluidizing gas from the fluidizing tubes 62, and distributes it evenly to the quartz tubes 36.

In operation, the infra-red lamps 46 may heat from -18°C to 2,204°C (0°F to 4,000°F). The aluminum oxide will heat from -18°C to 1,149°C (0°F to 2,100°F). A controller 100 (schematically shown in Fig. 2) is connected through control lines 102 to each bus plates 50. Through operation of controller 100, the potential on each of bus plates 50 may be separately controlled. Accordingly, the plurality of infra-red lamps 46 are divided into a plurality of separately controllable zones.

In operation, the lamps 46 heat the aluminum oxide. The fluidizing gas from tubes 62 fluidizes the aluminum oxide. The divider walls 31, 32 capture within chambers 20b and 20c any aluminum oxide which spills out of the fluidizing chamber 20a.

Each of lamps 46 and tubes 36 comprise a lamp assembly 37 (shown numbered in Figs. 3, 5 and 6). As previously indicated, a cooling gas is passed through the lamp assemblies 37. In operation, the temperature of the apparatus can be quite high. For example, the temperature surrounding the assemblies 37 will commonly exceed 1,149°C (2,100°F). At temperatures in excess of 816°C (1,500°F), the quartz tubes 36 may deteriorate. For example, from 816°C to 982°C (1,500 to 1,800°F), quartz softens and sags.

The air passing through the quartz tubes 36, cools the quartz tubes 36 to prevent sagging. However, the air flow can adversely effect the efficiency of the infra-red lamps 46. Accordingly, air flow through the quartz tubes 36 must be balanced to provide sufficient cooling to prevent the quartz tubes 36 from sagging while minimizing the adverse impact on the efficiency of the lamps 46.

To achieve the desired balancing, air flow through quartz tubes 36 is preferably only provided when the temperature of the fluidized bed 38 exceeds a predetermined temperature in a preferred embodiment, the predetermined temperature is 816°C (1,500°F).

The amount of air flow through the tubes 36 is selected to balance the thermal energy on the tubes 36. Namely, the bed 38 draws thermal energy from the tubes 36. If the thermal energy drawn from the tubes 36 is insufficient to keep the temperature of the tubes 36 below the predetermined temperature, air flow is passed through the tubes 36 at a rate selected to draw energy away from the tubes 36. The amount of air flow is a function of the length of the tubes 36, the voltage across the lamps 46 and the ambient temperature (i.e., the temperature of the bed in the immediate vicinity of the tubes 36). The actual amount of air flow is empirically derived for a given apparatus 10 and will vary with the operating process in which it is used.

To achieve the balancing, a thermocouple 100 (schematically shown only in Fig. 5) is provided for sensing the temperature within bed 38 in the vicinity of the tubes 36. Thermocouple 100 provides a signal to a controller 102. The controller 102 also receives an input from a voltage sensor 104 which senses a voltage across the lamps 46. Comparing the voltage on the lamps 46 and the temperature within bed 38, the controller 102 operates blower 70 to force coolant gas through the quartz tubes 36 when the temperature within the bed 38 exceeds the predetermined temperature. The air flow through the quartz tubes 36 is selected to be an increasing function of the voltage across the lamps 46 and to be increasing with the increased temperature measured by thermocouple 100. The increasing function is selected for the air flow to be the minimum air flow necessary to prevent deterioration of the quartz tubes 36.

The preferred embodiment discloses use of air cooled lamp assemblies 37. A further embodiment may replace the assemblies with resistance type silicon carbide heating elements (also called glow bars). These elements may be electrically energized to heat and generate infrared radiation. These elements may be used in direct contact with the bed and do not require quartz conduits (such as tubes 36) or air cooling. Such elements are commercially available such as those marketed by Smith-Sharpe of Minneapolis, Minnesota.

The apparatus 10 described above has been illustrated for use with heat treating a product within a fluidized bed. In addition to those beneficial uses, we have determined that the apparatus 10 is surprisingly useful for re-claiming foundry sand.

In the foundry industry, various types of sands are used to form moldings from which metal castings are made. These sands include so called "no-bake" sands and so called "green" sand. A no-bake sand includes an organic binder which is air cured to bind the sand into a sand casting. Green sand includes an inorganic binder which is baked to bind the sand into a casting.

Government agencies (such as the U.S. Environmental Protection Agency) have severely restricted the disposal of foundry sand. For example, foundry sand cannot be readily disposed in landfills since it is considered a hazardous material.

Various methods have been devised to re-claim foundry sand. No-bake sand is re-claimed through a mechanical method of passing the sand through a crusher and a scrubber to re-claim about 80% of the sand.

The foundry industry has been experimenting with various methods to re-claim sand through temperature applications (referred to in the industry as "killing" the sand at elevated temperatures). For example, the industry has used gas fired fluidized beds to thermally re-claim the sand. An example of such is found in U.S. Patent No. 4,478,572.

To re-claim green sand, the sand must be heat treated to temperatures in excess of 760°C to 816°C (1,400 to 1,500°F). When natural gas is used at the heat source, a substantial amount is required. Also, the capital cost of such equipment is very high.

We have found that our apparatus is particularly suitable for re-claiming foundry sand including green sand. To accomplish this, the foundry sand is used as the fluidized bed in the furnace 10 instead of using the granular aluminum oxide previously described as the preferred fluidized bed particles.

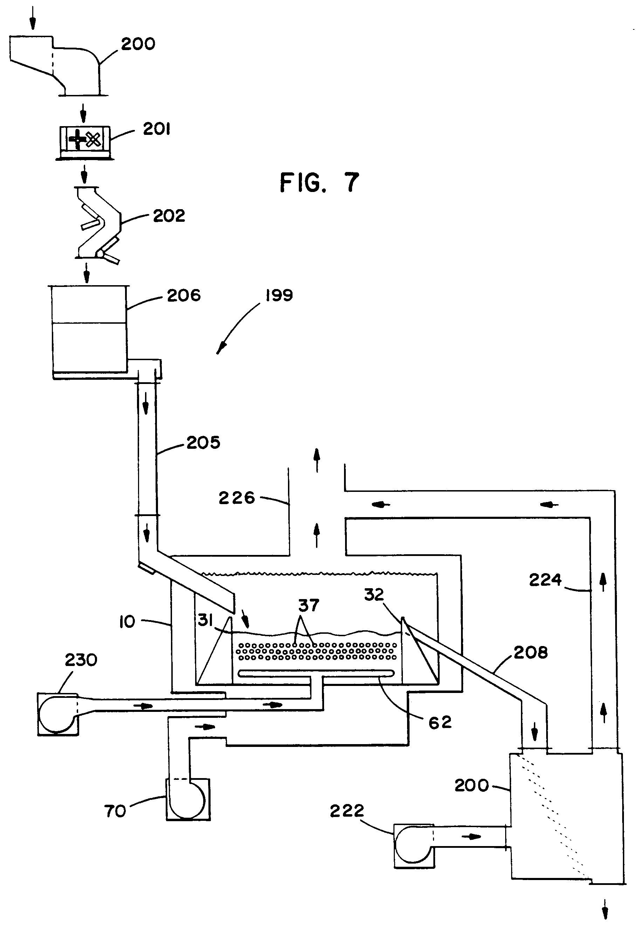

Fig. 7 shows, in schematic format, the use of the apparatus 10 to re-claim green sand. As shown in Fig. 7, a reclamation system 199 would include feed hopper 200 for passing sand to a crusher 201. Crusher 201 crushes the sand and passes it to a magnetic separator 202 to separate out ferromagnetic material. A metering hopper 206 collects sand from separator 202 and feeds the separated sand (via a conduit) 209 to the furnace 10. The fully re-claimed sand is passed from apparatus 10 through discharge conduit 208.

The hot re-claimed sand is passed from discharge conduit 208 to a cascade cooler 220. A blower 222 blows cooling air to cooler 220. A blower 222 blows cooling air to cooler 220 with the air exhausted through conduit 224 to main exhaust conduit 226 from which it passes to filters and scrubbers (not shown).

A blower 230 forces air to the fluidizing tube 62. In use of the apparatus 10 for foundry sand recovery, the fluidizing gas is oxygen containing (preferably air) with oxygen reacting with the sand binder. Resulting product gas (e.g. CO, CO₂) and dust are drawn off through main conduit 226.

Use of the furnace 10 to re-claim foundry sand has run with no-bake sand at 400°C (750°F) with a reclamation of about 94% by weight of the sand. Also, 94% of green sand has been re-claimed when operating the furnace to create a fluidized bed temperature of 760°C to 871°C (1,400 to 1,600°F). The latter is of substantial significance to the foundry industry which, prior to the present invention, was not capable of economically re-claiming green sand.

The present apparatus has numerous advantages for use in re-claiming foundry sand. It has a much lower capital cost than prior thermal treatment apparatus for foundry sand. It operates at a much lower energy cost than prior thermal treatment apparatus and has a fast through-put.

The actual physics and chemistry by which the apparatus 10 is so effective in re-claiming sand is not fully understood. However, it is believed the submergence of an infra-red heat source in the bed of sand causes individual sand grains to experience momentary periods of very high temperature. For example, while the bed may have an average temperature of about 760°C (1,400°F), individual grains come in momentary close proximity to submerged heat sources (i.e. IR lamps or glow bars) which may have very high temperatures. It is suspected the momentary very high temperature makes the sand binders brittle and burn off. As a result, the sand re-claimed through the novel method requires very little scrubbing compared to sand re-claimed through prior art techniques.

Through the foregoing detailed description of the present invention, it has been shown how the invention has been obtained in a preferred manner. However, modifications and equivalents of the disclosed concepts, such as those which will readily occur to one skilled in the art, are intended to be included within the scope of the invention.

## Claims

1. A method for reclaiming used foundry sand within an apparatus having means for defining a volume for receiving a bed of said sand with said bed of said sand having a predetermined elevation within said volume, comprising the steps of:
admitting used foundry sand, containing binders, into said volume so as to define a bed of said foundry sand within said volume wherein said bed of said foundry sand has a predetermined elevation within said volume;
disposing a plurality of conduits of infrared radiation transparent material within said bed of said foundry sand and beneath said predetermined elevation;
disposing an electrically powered source of infrared radiation, for generating infrared radiation heat for heating said bed of said used foundry sand, within each one of said plurality of conduits such that each one of said sources of infrared radiation is protected by respective ones of said conduit, from said bed of said used foundry sand;
energizing said sources of infrared radiation so as to generate heat sufficient to separate said sand from said binders so as to reclaim said sand;
fluidizing said bed of said used foundry sand while heating said bed of said used foundry sand by means of said sources of infrared radiation; and
discharging said heat treated reclaimed sand from said bed of said used foundry sand such that said reclaimed foundry sand can again be used as foundry sand in forming sand casting molds.

2. The method as set forth in claim 1, further comprising the step of:
conducting said used foundry sand through a magnetic separator, prior to said admission of said used foundry sand into said volume, so -s to separate said sand from ferromagnetic material which may be present within said sand.

3. The method as net forth in claim 1, wherein:
said used foundry sand comprises no-bake sand; and
said bed of said no-bake foundry sand is heated to a temperature level of approximately at least 400°C (750°F).

4. The method as set forth in claim 1, wherein:
said used foundry sand comprises green sand; and
said bed of said green foundry sand is heated to a temperature level of approximately 760°C to 871°C (1,400 to 1,600°F).

5. The method as set forth in claim 1, wherein said bed in fluidized with air.

6. Apparatus for reclaiming used foundry sand, comprising:
means defining a volume for receiving a bed of used foundry sand containing binders;
means for charging said used foundry sand into said means defining said volume so as to form a bed of said used foundry sand, having a predetermined elevation, within said means defining said volume;
a plurality of conduits of infrared radiation transparent material disposed in a submerged state within said bed of said used foundry sand so as to be disposed beneath said predetermined elevation;
a plurality of electrically powered sources of infrared radiation for generating infrared radiation heat sufficient to heat said bed of said used foundry sand to a predetermined temperature level so as to separate said sand from said binders so as to reclaim said sand, respectively disposed within said plurality of conduits so as to be protected by respective ones of said conduits from said sand particles of said bed of used foundry sand;
means for introducing a fluidizing gas into said bed of said used foundry sand; and
means for discharging said heat treated reclaimed sand from said means defining sold volume such that said reclaimed foundry sand can again be used as foundry sand for forming sand casting molds.

7. Apparatus as set forth in claim 7, further comprising:
magnetic separating means for separating said used foundry sand, prior to said charging of said used foundry sand into said means defining said volume, from ferromagnetic materials which may be present within said used foundry sand.

8. Apparatus as set forth in claim 6, wherein:
said used foundry sand comprises no-bake sand; and
said sources of infrared radiation being capable of heating said bed of used foundry sand to a temperature level of approximately at least 400°C (750°F).

9. Apparatus as set forth in claim 6, wherein:
said used foundry sand comprises green sand; and
said sources of infrared radiation being capable of heating said bed of used foundry sand to a temperature level of approximately 760°C to 871°C (1,400 to 1,600°F).

## Patentansprüche

1. Verfahren zur Zurückgewinnung von gebrauchtem Gußsand in einer Vorrichtung mit einem Mittel zur Bestimmung eines Volumens zur Aufnahme eines Bettes des Sandes, wobei das Bett des Sandes eine vorbestimmte Höhe innerhalb des Volumens hat, mit den Verfahrensschritten:
Zuführen von gebrauchtem, Bindemittel enthaltendem Gußsand in das Volumen, um ein Bett des Gußsandes innerhalb des Volumens zu bestimmen, wobei das Bett des Gußsandes eine vorbestimmte Höhe innerhalb des Volumens hat;
Anordnen einer Vielzahl von Rohren aus infrarotdurchlässigem Material innerhalb des Bettes des Gußsandes und unterhalb der vorbestimmten Höhe;
Anordnen einer elektrisch betriebenen Infrarot-Strahlungsquelle zur Erzeugung infraroter Strahlungswärme zum Heizen des Bettes des gebrauchten Gußsandes innerhalb jedes der Vielzahl Rohre, so daß jede einzelne der Infrarot-Strahlungsquellen durch bestimmte der Rohre vor dem Bett des gebrauchten Gußsandes geschützt ist;
Zuführen von Energie in die Infrarot-Strahlungsquellen zum Erzeugen hinreichender Wärme, um den Sand von den Bindemitteln zu trennen, um den Sand zurückzugewinnen;
Verwirbeln des Bettes des gebrauchten Gußsandes während des Aufheizens des Bettes des gebrauchten Gußsandes mittels der Infrarot-Strahlungsquellen; und
Entladen des wärmebehandelten zurückgewonnenen Sandes aus dem Bett des gebrauchten Gußsandes, so daß der zurückgewonnene Gußsand wieder als Gußsand zur Bildung von Sandgußformen verwendet werden kann.

2. Verfahren nach Anspruch 1, gekennzeichnet durch den weiteren Verfahrensschritt:
Führen des gebrauchten Gußsandes durch einen magnetischen Separator vor dem Zuführen des gebrauchten Gußsandes in das Volumen, um den Sand von ferromagnetischem Material, welches in dem Sand vorhanden sein kann, zu trennen.

3. Verfahren nach Anspruch 1, dadurch gekennzeichnet, daß:
der gebrauchte Gußsand nichtbackenden Sand aufweist;
und
das Bett des nichtbackenden Gußsandes auf ein Temperaturniveau von etwa mindestens 400 °C (750 °F) erwärmt wird.

4. Verfahren nach Anspruch 1, dadurch gekennzeichnet, daß:
der gebrauchte Gußsand Grünsand aufweist; und
das Bett des Grüngußsandes auf ein Temperaturniveau von ungefähr 760 °C bis 871 °C (1400 bis 1600 °F) erwärmt wird.

5. Verfahren nach Anspruch 1, dadurch gekennzeichnet, daß das Bett mit Luft verwirbelt wird.

6. Vorrichtung zur Zurückgewinnung von gebrauchtem Gußsand mit:
einem Mittel zur Bestimmung eines Volumens zur Aufnahme eines Bettes des gebrauchten, Bindemittel enthaltenden Gußsandes;
einem Mittel zum Laden des gebrauchten Gußsandes in das Mittel zur Bestimmung des Volumens, um ein Bett des gebrauchten Gußsandes mit einer vorbestimmten Höhe innerhalb des Mittels zur Bestimmung des Volumens zu bilden;
einer Vielzahl von Rohren aus infrarotdurchlässigem Material, versenkt angeordnet innerhalb des Bettes des gebrauchten Gußsandes unterhalb der vorbestimmten Höhe;
einer Vielzahl von elektrisch betriebenen Infrarot-Strahlungsquellen zur Erzeugung hinreichender infraroter Strahlungswärme zum Heizen des Bettes des gebrauchten Gußsandes auf ein vorbestimmtes Temperaturniveau,
um den Sand von den Bindemitteln zu trennen, um den Sand zurückzugewinnen, angeordnet jeweils innerhalb der Vielzahl Rohre zum Schutz durch bestimmte der Rohre vor Sandpartikeln des Bettes des gebrauchten Gußsandes;
einem Mittel zum Zuführen eines Wirbelgases in das Bett des gebrauchten Gußsandes; und
einem Mittel zum Entladen des wärmebehandelten zurückgewonnenen Sandes aus dem Mittel zur Bestimmung des Volumens, so daß der zurückgewonnene Gußsand wieder als Gußsand zur Bildung von Sandgußformen verwendet werden kann.

7. Vorrichtung nach Anspruch 6, dadurch gekennzeichnet, daß sie weiterhin einen magnetischen Separator zur Trennung des gebrauchten Gußsandes von ferromagnetischen Materialien, die im gebrauchten Gußsand vorhanden sein können, vor dem Laden des gebrauchten Gußsandes in das Mittel zur Bestimmung des Volumens, aufweist.

8. Vorrichtung nach Anspruch 6, dadurch gekennzeichnet, daß
der gebrauchte Gußsand nichtbackenden Sand aufweist;
und
die Infrarot-Strahlungsquellen geeignet sind, das Bett des gebrauchten Gußsandes auf ein Temperaturniveau von etwa mindestens 400 °C (750 °F) zu erwärmen.

9. Vorrichtung nach Anspruch 6, dadurch gekennzeichnet, daß:
der gebrauchte Gußsand Grünsand aufweist; und
die Infrarot-Strahlungsquellen geeignet sind, das Bett des gebrauchten Gußsandes auf ein Temperaturniveau von etwa 760 °C bis 871 °C (1400 bis 1600 °F) zu erwärmen.

## Revendications

1. Procédé de régénération de sable de fonderie utilisé dans un appareil comportant des moyens pour définir un volume destiné à recevoir un lit de ce sable, ce lit de sable se trouvant à une hauteur prédéterminée à l'intérieur du volume, procédé caractérisé en ce qu'il comprend les étapes consistant à :
- admettre le sable de fonderie utilisé, contenant des liants, dans le volume de manière à former un lit de ce sable de fonderie à l'intérieur du volume dans lequel le lit de sable de fonderie se trouve à une hauteur prédéterminée dans le volume ;
- disposer une pluralité de conduits d'un matériau transparent au rayonnement infrarouge ou à l'intérieur du lit de sable de fonderie, au-dessous de la hauteur prédéterminée ;
- disposer une source d'alimentation électrique de rayonnement infrarouge destinée à générer de la chaleur de rayonnement infrarouge pour chauffer le lit de sable de fonderie utilisé, à l'intérieur de chacun de la pluralité de conduits de façon que chacune des sources de rayonnement infrarouge soit protégée du lit de sable de fonderie utilisé, par l'un des conduits correspondant ;
- exciter les sources de rayonnement infrarouge de manière à générer suffisamment de chaleur pour séparer le sable des liants, afin de régénérer ce sable ;
- fluidiser le lit de sable de fonderie utilisé tout en chauffant ce lit de sable de fonderie utilisé au moyen des sources de rayonnement infrarouge ; et
- décharger le sable régénéré par traitement thermique, du lit de sable de fonderie utilisé, de façon que le sable de fonderie régénéré puisse de nouveau être utilisé comme sable de fonderie pour former des moules de coulée en sable.

2. Procédé selon la revendication 1, caractérisé en ce qu'il comprend en outre l'étape consistant à faire passer le sable de fonderie utilisé dans un séparateur magnétique, avant l'admission de ce sable de fonderie utilisé dans le volume, de manière à séparer de ce sable tous matériaux ferromagnétiques pouvant être présents dans celui-ci.

3. Procédé selon la revendication 1, caractérisé en ce que :
- le sable de fonderie utilisé comprend du sable non cuit ; et
- le lit de ce sable de fonderie non cuit est chauffé à un niveau de température d'environ au moins 400°C (750°F).

4. Procédé selon la revendication 1, caractérisé en ce que :
- le sable de fonderie utilisé comprend du sable frais ; et
- le lit de ce sable de fonderie frais est chauffé à un niveau de température d'environ 760°C à 871°C (1400 à 1600°F).

5. Procédé selon la revendication 1, caractérisé en ce que le lit est fluidisé par de l'air.

6. Appareil pour régénérer du sable de fonderie utilisé, caractérisé en ce qu'il comprend :
- des moyens définissant un volume pour recevoir un lit de sable de fonderie utilisé contenant des liants ;
- des moyens pour charger le sable de fonderie utilisé dans les moyens définissant ce volume, de manière à former un lit de ce sable de fonderie utilisé se trouvant à une hauteur prédéterminée à l'intérieur des moyens définissant le volume ;
- une pluralité de conduits d'un matériau transparent au rayonnement infrarouge, ces conduits étant disposés complètement à l'intérieur du lit de sable de fonderie utilisé, de manière à se trouver au-dessous de la hauteur prédéterminée ;
- une pluralité de sources à alimentation électrique de rayonnement infrarouge destinées à générer suffisamment de chaleur de rayonnement infrarouge pour chauffer le lit de sable de fonderie utilisé à un niveau de température prédéterminé, de manière à séparer le sable des liants pour régénérer ce sable, chacune de ces sources de rayonnement infrarouge étant respectivement disposée à l'intérieur de la pluralité de conduits de manière à être protégée des particules de sable du lit de sable de fonderie utilisé, par l'un des conduits correspondant ;
- des moyens pour introduire un gaz de fluidisation dans le lit de sable de fonderie utilisé ; et
- des moyens pour décharger le sable régénéré par traitement thermique, des moyens définissant le volume, de façon que ce sable de fonderie régénéré puisse de nouveau être utilisé comme sable de fonderie pour former des moules de coulée en sable.

7. Appareil selon la revendication 6, caractérisé en ce qu'il comprend en outre des moyens de séparation magnétique pour séparer le sable de fonderie utilisé, avant de charger ce sable de fonderie utilisé dans les moyens définissant le volume, de matériaux ferromagnétiques pouvant être présents dans ce sable de fonderie utilisé.

8. Appareil selon la revendication 6, caractérisé en ce que :
- le sable de fonderie utilisé comprend du sable non cuit ; et
- les sources de rayonnement infrarouge sont capables de chauffer le lit de ce sable de fonderie utilisé, à un niveau de température d'environ au moins 400°C (750°F).

9. Appareil selon la revendication 6, caractérisé en ce que :
- le sable de fonderie utilisé comprend du sable frais ; et
- les sources de rayonnement infrarouge sont capables de chauffer le lit de ce sable de fonderie utilisé, à un niveau de température d'environ 760°C à 871°C (1400 à 1600°F).
